# EUROPEAN PATENT SPECIFICATION

(11) **EP 1 724 127 B1**
(45) Date of publication and mention of the grant of the patent: **10.07.2013**
(21) Application number: 06016817.6
(22) Date of filing: 03.02.2003
(51) Int. Cl.: B60C 23/04

(54) **ATTACHMENT METHOD FOR TIRE TAG**
Methode zur Befestigung eines Reifen-Tags
Procédé permettant de fixer une étiquette à un pneu

(30) Priority: 18.02.2002 US 357923 P; 21.08.2002 US 405189 P
(43) Date of publication of application: 22.11.2006
(62) Divisional of application: 03707682.5
(73) Proprietor: Bridgestone Americas Tire Operations, LLC, Nashville, TN 37214 (US)
(72) Inventor: Bell, Thomas W., Wadsworth, Ohio 44281 (US)
(74) Representative: Banzer, Hans-Jörg

(56) References cited:
- EP-A- 0 936 089
- WO-A-99/41093

## Description

### BACKGROUND OF THE INVENTION

### 1. FIELD OF THE INVENTION

The invention relates to a tire and a method of securing an electronic object thereto. More particularly, the invention relates to a tire and a method of connecting an electronic monitoring or identification device to the tire. Specifically, the present invention relates to a tire having a device secured to the tire with a mechanical or interference fit connection formed by a method that uses a hook and loop fastening system.

### 2. BACKGROUND INFORMATION

It is often desirable to attach objects to a tire, and particularly to the innerliner of a tire. One application of such a method is to attach a radio frequency identification tag or chip (RFID) to the innerliner of a tire. These RFID chips store tire identification data, which may then be read from the RFID chip by a remote reader as the tire passes through an assembly line.

Another such application is to secure a pressure and/or temperature-sensing device to the innerliner of the tire. The sensor monitors the pressure and temperature inside of the tire and transmits this data to a receiver located outside of the tire, for example mounted on the vehicle.

One of the difficulties of attaching objects to the innerliner of a tire is that during production of the tire, the innerliner and/or the tire-forming bladder are typically coated with a release agent, such as silicone, to prevent the tire from sticking to the tire-forming bladder during curing of the green tire. The physical and chemical properties of the releasing agent are such that it is designed to prevent adhesion to a surface on which it is applied. Thus making it difficult to attach an RFID chip, sensing device or other object to the innerliner of a tire.

One method that has been attempted in the prior art is to attach the RFID chip or sensing device to the green tire prior to the addition of the releasing agent and prior to curing or vulcanization of the tire. Although this method is adequate for the purpose for which it was intended, subjecting the RFID chip and/or sensing devices to the extreme heat of the vulcanization process can damage the sensitive electronics of these devices. In addition, having an object contacting the inflated tire-forming bladder may damage the tire-forming bladder.

Thus, what is needed is a tire which includes objects attached thereto and a method of securing these objects to the tire.

A method according to the preamble of claim 1 or claim 13, and a tire according to the preamble of claim 14 are known from EP 0 936 089 A2.

### BRIEF SUMMARY OF THE INVENTION

According to the present invention, a method of attaching an electronic device to a tire as defined by independent claims 1 and 13 and a tire as defined by independent claim 14 are provided. The dependent claims define embodiments of the invention.

### BRIEF DESCRIPTION OF THE SEVERAL VIEWS OF THE DRAWINGS

Fig. 1 shows the first portion of a two-piece fastening system being attached to the innerliner of a tire.
Fig. 2 shows an radio frequency identification (RFID) chip being attached to the second portion of the two-piece fastening system.
Fig. 3 shows the second portion of the two-piece fastening system, with the RFID chip attached thereto, being attached to the first portion of the two-piece fastening system.
Fig. 4 is an exploded section view of an alternative embodiment of the invention wherein the RFID chip will be sandwiched between the two portions of the two-piece fastening system.
Fig. 5 is a section view of the RFID chip mechanically trapped between the two portions of the two-piece fastening system with the two-piece fastening system connected to the tire.
Fig. 6 is a top plan view of the sandwiched RFID chip.
Fig. 7 is an exploded section view of an alternative embodiment of the invention wherein the RFID chip will be connected to the outwardly facing surface of the two-piece fastening system and encapsulated with an encapsulation material.
Fig. 8 is a section view of the RFID chip secured to the outwardly facing surface of the second portion of the two-piece fastening system with the encapsulation material.
Fig. 9 is a section view of the RFID chip secured to the two-piece fastening system which is secured to the tire.

Similar numerals refer to similar parts throughout the specification.

### DETAILED DESCRIPTION OF THE INVENTION

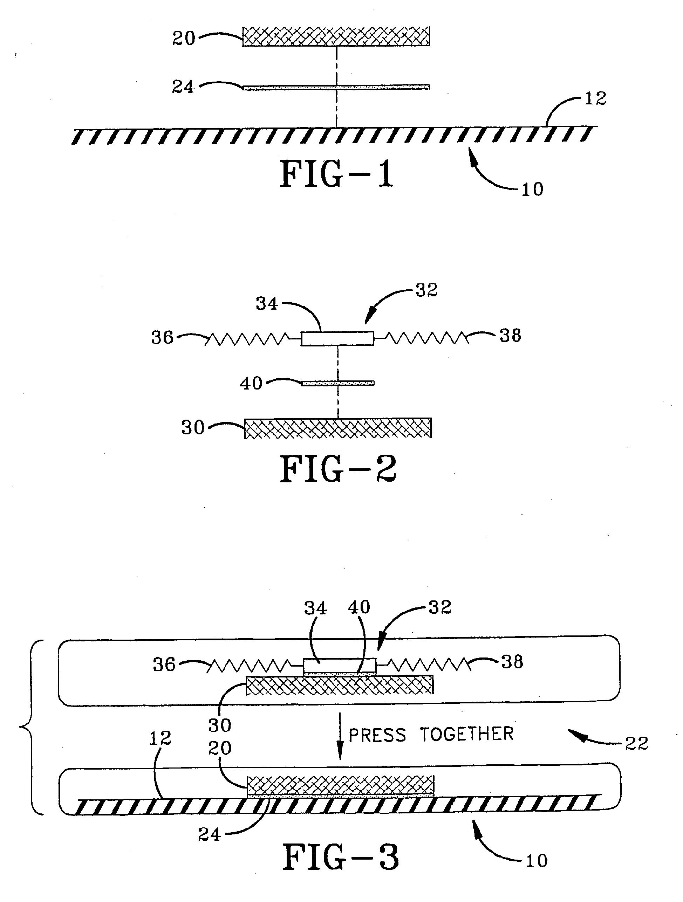

A portion of an uncured tire, or green tire, is indicated generally by the numeral 10 in Fig. 1. Tire 10 is formed of a "green" rubber and includes an innerliner 12 that forms the inner surface of tire 10. Innerliner 12 is an air impermeable layer of rubber which, along with a wheel (not shown), forms the air chamber of the tire/wheel combination.

Uncured tire 10 is generally circular in shape and is formed with a hollow interior. Green tire 10 is placed within a tire curing mold wherein the tire is exposed to extreme heat to cure or vulcanize the green rubber. The tire curing mold (not shown) includes a tire forming bladder that expands within the hollow interior of the tire while the tire is cured to retain the tire in its desired shape during curing. This tire forming bladder is formed of a rubber material which allows it to expand and contract into and out of the interior of the tire. To prevent the rubber bladder from adhering to innerliner 12 of tire 10 during the curing process, the tire, the bladder, or both are coated with a release agent, which is preferably a silicone material. The release agent has physical and chemical properties that are designed to prevent adhesion thus making it difficult to attach objects innerliner 12 after tire 10 is cured.

In accordance with the invention, a first portion 20 of a two-piece fastening system or assembly 22 (Fig. 3) is attached to innerliner 12 of green tire 10. First portion 20 may be attached to innerliner 12 using various types of adhesives, and in the preferred embodiment is attached to innerliner 12 with a silicone adhesive 24, such as RTV 382 Silicone Adhesive manufactured by Intek Adhesives Ltd. of Blyth, Northumberland, UK. First portion 20 may also be cured to innerliner 12 during the tire curing process. One method of curing first portion 20 to innerliner 12 is to provide first portion 20 with a portion of uncured rubber that is pressed against the uncured rubber of innerliner 12 before green tire 10 is cured. The portion of uncured rubber will bond to the innerliner during the tire curing process to or attach or connect first portion 20 to innerliner 12.

In either of these attachment methods, first portion 20 is brought into contact with innerliner 12 before innerliner 12 is coated with the release agent. After first portion 20 of the two-piece fastening system 22 is brought into contact with innerliner 12, green tire 10 is placed within the tire-curing mold where the green tire 10 is cured. Innerliner 12 and first portion 20 may then be sprayed with the release agent. In some cases, the bladder may have then release agent. In either situation, the release agent will not degrade the secure connection between first portion 20 and innerliner 12.

A second portion 30 of two-piece fastening system 22 is shown in Fig. 2. In accordance with the invention, a radio frequency identification (RFID) chip or tag 32 is connected to second portion 30. RFID chip 32 includes a chip 34 and two outwardly extending antennae 36 and 38. Second portion 30 may be attached to RFID tag 32 using various types of adhesives, and in the preferred embodiment is attached to RFID 32 using a cyanoacrylate-based adhesive 40. Tag 32 may also be a monitoring-style tag that transmits pressure and temperature information from the tire.

Upon tire 10 being removed from the tire-curing mold, second portion 30 of the two-piece fastening system 22 may be attached to first portion 20 of the two-piece fastening system 22 thus attaching RFID 32 to innerliner 12 of tire 10.

Two-piece fastening system 22 may be any of a number of fastening systems which include first portion 20 which is capable of being subjected to the heat and pressure of the tire-curing mold and second portion 30 which attaches to the object to be secured to the tire. Examples of such a fastening system include but are not limited to a hook-and-loop fastener, such as VELCRO® brand fasteners (VELCRO is a registered trademark of Velcro Industries B.V. of Castorweg, Netherlands Antilles), or a hook-and-hook fastener or a DUAL LOCK® low profile reclosable fastener (DUAL LOCK is a registered trademark of Minnesota Mining and Manufacturing of Saint Paul, MN). These fastening systems are particularly useful in this application because they include a plurality of small individual connectors that tighten when subjected to vibrations. As such, the connection between tag 32 and the tire will tight when the tire is installed on a vehicle and placed into service. These fastening systems provide first portion 20 that is attached to tire 10 prior to the tire 10 being cured. First portion 20 does not contain a sensitive electronic device that may be damaged during the curing process or any object which may damage the tire-curing bladder. Second portion 30, which is adhered or otherwise attached to the electronic device 32 or object, may then be attached to first portion 20 after first portion 20 has been subjected to the tire curing conditions.

RFID tag 32 stores tire identification information of the tire and is read by a reader that is spaced remotely from the tire as the tire travels through an assembly or production line. First portion 20 of two-piece fastening system 22 is preferably placed in the region of the tread and sidewall junction of the tire, although other locations may be suitable provided RFID tag 32 can be read by the remote reader. Further, the method and tire of the present invention eliminate the problems of the releasing agent preventing adhesion to innerliner 12 of the tire as first portion 20 is attached to innerliner 12 prior to the releasing agent being applied to the inside of tire 10. The silicone adhesive described above allows the releasing agent to be applied to the tire without affecting the bond between first portion 20 of two-piece fastening system 22 and innerliner 12 of tire 10.

In an alternate embodiment, a pressure or temperature sensing device may be attached to second portion 30 of two-piece fastening system 22. Such a sensing device transmits temperature and pressure data of the inner air chamber of the tire to a reader located outside of the tire air chamber. This data may then be transmitted to a driver of the vehicle to notify the driver of a low pressure or high temperature within the tire. The method of the present invention allows sensitive electronic devices, such as pressure or temperature sensors, to be attached to innerliner 12 of a tire without subjecting the electronic devices to the high curing temperatures of the tire.

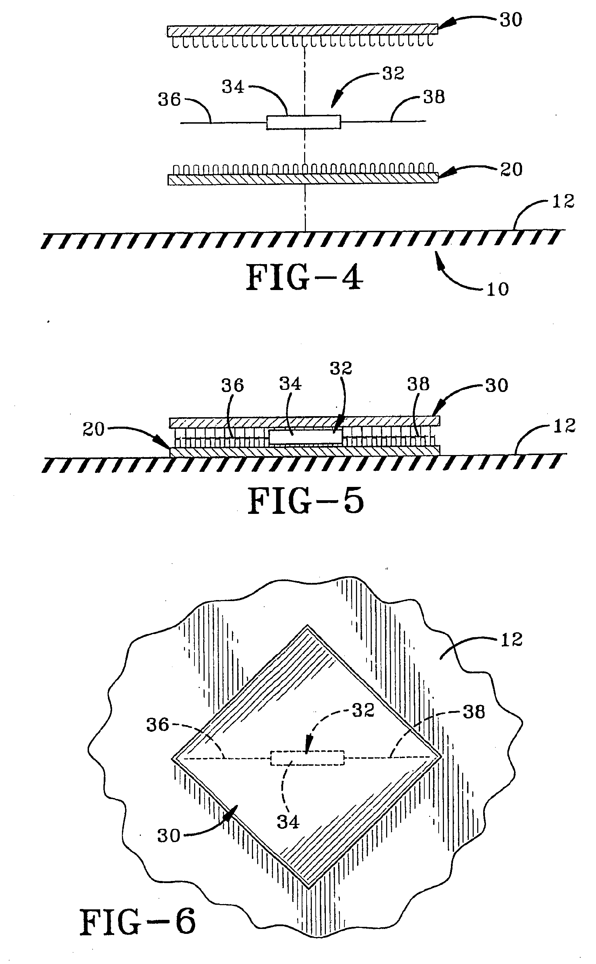

An alternative embodiment of the tire and method of the invention is depicted in Figs. 4-6. In this embodiment, RFID tag 32 or the sensor is sandwiched between first portion 20 and second portion 30 of system 22 such that RFID tag 32 is mechanically trapped between portions 20 and 30. Although the drawings depict a hook and loop fastening system with first portion 20 being loops, portions 20 and 30 may be switched so that loops 20 are used with second portion 30. In this embodiment, first portion 20 is connected to innerliner 12 in one of the manners described above. Aftertire 10 is cured, RFID tag is positioned between portions 20 and 30 such that tag 32 is sandwiched between the two portions where tag 32 cannot be removed without detaching portion 30 from portion 20. An advantage to this embodiment over prior art connection methods is that portion 30 may be flexible so that it can accommodate tag 32 when portion 30 is placed over the top of tag 32.

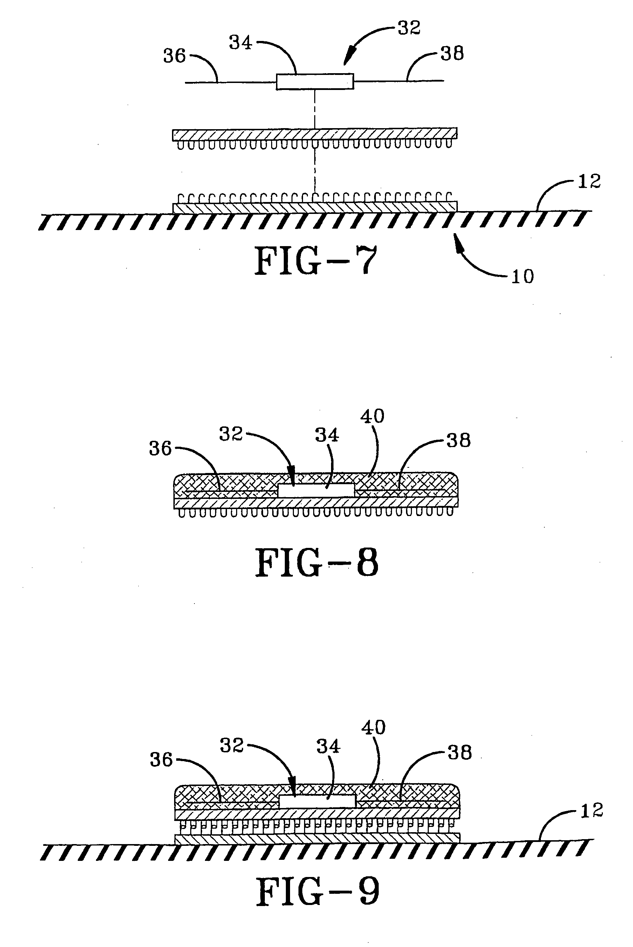

An alternative embodiment is depicted in Figs. 7-9 wherein tag 32 is connected to second portion 30 with an encapsulation material 40. Encapsulation material 40 may be any of a variety of materials such as epoxies, adhesives, rubbers, plastics, or thermoplastics that can surround tag 32 and attach tag 32 to second portion 30. Encapsulation material 40 may be used to protect tag 32 from the environment inside the cured tire while securely holding tag 32 to second portion 30. One advantage of encapsulation material 40 is that its rigidity may be controlled to protect tag 32 from damage while allowing system 22 to flex with the cured tire.

In the foregoing description, certain terms have been used for brevity, clearness, and understanding. No unnecessary limitations are to be implied therefrom beyond the requirement of the prior art because such terms are used for descriptive purposes and are intended to be broadly construed.

Moreover, the description and illustration of the invention is an example and the invention is not limited to the exact details shown or described.

## Claims

1. A method of attaching an electronic device to a tire, including the steps of:
(a) providing a cured tire (10) having a first portion (20) of a mechanical two-piece fastening system (22) attached to the tire (10);
(b) attaching the electronic device (32) to a separate second portion (30) of the two-piece fastening system (22); and
(c) attaching the second portion (30) of the two-piece fastening system (22) to the first portion (20) of the two-piece fastening system (22),
wherein the two-piece fastening system (22) comprises a plurality of small connectors at the first portion (20) and the second portion (30) of the two-piece fastening system (22) for attaching the second portion (30) to the first portion (20) of the two-piece fastening system (22) in step (c),
**characterized by**
further comprising the step of providing a hook-and-loop fastening system for the mechanical two-piece fastening system (22).

2. The method as defined in claim 1 wherein step (b) includes the step of connecting a radio frequency identification chip (32) to the second portion (30) of the two-piece fastening system (22).

3. The method as defined in claim 1 wherein step (b) includes the step of connecting a pressure sensor to the second portion (30) of the two-piece fastening system (22).

4. The method as defined in claim 1 wherein step (b) includes the step of connecting a temperature sensor to the second portion (30) of the two-piece fastening system (22).

5. The method as defined in claim 1 further comprising the step of providing a fastening system that tightens when subjected to vibrations for the mechanical two-piece fastening system (22).

6. The method as defined in claim 1 further comprising the step of attaching the first portion (20) of the two-piece fastening system (22) to the innerliner (12) of the tire (10) before it is cured.

7. The method as defined in claim 6 further comprising the step of attaching the first portion (20) of the two-piece fastening system (22) to the innerliner (12) with an adhesive (24).

8. The method as defined in claim 7 further comprising the step of attaching the first portion (20) of the two-piece fastening system (22) to the innerliner (12) with a silicone adhesive (24).

9. The method as defined in claim 1 further comprising the step of attaching the electronic device (32) to the second portion (30) of the two-piece fastening system (22) with an adhesive (40).

10. The method as defined in claim 9 further comprising the step of attaching the electronic device (32) to the second portion (30) of the two-piece fastening system (22) with a cyanoacrylate-based adhesive (40).

11. The method as defined in claim 1 further comprising the step of providing a two-piece fastening system (22) having first and second portions (20, 30) that are removably connected to one another.

12. The method as defined in claim 1 wherein step (b) includes the step of encapsulating the electronic device (32).

13. A method of attaching an electronic device to a tire, including the steps of:
(a) providing a cured tire (10) having a first portion (20) of a two-piece fastening system (22) attached to the tire (10);
(b) providing a second portion (30) of the two-piece fastening system (22) separately from the electronic device (32); and
(c) attaching the second portion (30) of the two-piece fastening system (22) to the first portion (20) of the two-piece fastening system (22),
wherein the two-piece fastening system (22) comprises a plurality of small connectors at the first portion (20) and the second portion (30) of the two-piece fastening system (22) for attaching the second portion (30) to the first portion (20) of the two-piece fastening system (22) in step (c),
**characterized in that**
the second portion 30 of the two-piece fastening system (22) is attached to the first portion (20) of the two-piece fastening system (22) with the electronic device (32) to be secured to the tire (10) sandwiched between the first and second portions (20, 30) of the two-piece fastening system (22).

14. A tire including:
a first portion (20) of a two-piece fastening system (22) attached to the tire (10);
a second portion (30) of the two-piece fastening system (22) attached to the first portion (20) of the two-piece fastening system (22); and
an electronic device (32) attached to the second portion (30) of the two-piece fastening system (22),
wherein the two-piece fastening system (22) comprises a plurality of small connectors at the first portion (20) and the second portion (30) of the two-piece fastening system (22) for attaching the second portion (30) to the first portion (20) of the two-piece fastening system (22),
**characterized in that**
the second portion 30 of the two-piece fastening system (22) is attached to the first portion (20) of the two-piece fastening system (22) with the electronic device (32) to be secured to the tire (10) sandwiched between the first and second portions (20, 30) of the two-piece fastening system (22).

## Patentansprüche

1. Ein Verfahren für die Anbringung einer elektronischen Vorrichtung an einem Reifen, das die folgenden Schritte einschließt:
(a) Bereitstellen eines vulkanisierten Reifens (10), wobei ein erster Abschnitt (20) eines mechanischen zweiteiligen Befestigungssystems (22) an dem Reifen (10) angebracht ist;
(b) Anbringen der elektronischen Vorrichtung (32) an einem getrennten zweiten Abschnitt (30) des zweiteiligen Befestigungssystems (22); und
(c) Anbringen des zweiten Abschnitts (30) des zweiteiligen Befestigungssystems (22) an dem ersten Abschnitt (20) des zweiteiligen Befestigungssystems (22),
wobei das zweiteilige Befestigungssystem (22) eine Vielzahl von kleinen Verbindungsstücken an dem ersten Abschnitt (20) und dem zweiten Abschnitt (30) des zweiteiligen Befestigungssystems (22) zum Anbringen des zweiten Abschnitts (30) an dem ersten Abschnitt (20) des zweiteiligen Befestigungssystems (22) in Schritt (c) umfasst,
**dadurch gekennzeichnet, dass**
ferner der Schritt des Bereitstellens eines Klettverschluss-Befestigungssystems für das mechanische zweiteilige Befestigungssystem (22) umfasst ist.

2. Das Verfahren nach Anspruch 1, wobei der Schritt (b) den Schritt des Verbindens eines Funkfrequenz-Identifikationschips (32) mit dem zweiten Abschnitt (30) des zweiteiligen Befestigungssystems (22) einschließt.

3. Das Verfahren nach Anspruch 1, wobei der Schritt (b) den Schritt des Verbindens eines Drucksensors mit dem zweiten Abschnitt (30) des zweiteiligen Befestigungssystems (22) einschließt.

4. Das Verfahren nach Anspruch 1, wobei der Schritt (b) den Schritt des Verbindens eines Temperatursensors mit dem zweiten Abschnitt (30) des zweiteiligen Befestigungssystems (22) einschließt.

5. Das Verfahren nach Anspruch 1, ferner umfassend den Schritt des Bereitstellens eines Befestigungssystems, das beim Aussetzen gegenüber Vibrationen das mechanische zweiteilige Befestigungssystem (22) festigt.

6. Das Verfahren nach Anspruch 1, ferner umfassend den Schritt des Anbringens des ersten Abschnitts (20) des zweiteiligen Befestigungssystems (22) an der Innenauskleidung (12) des Reifens (10) bevor er vulkanisiert wird.

7. Das Verfahren nach Anspruch 6, ferner umfassend den Schritt des Anbringens des ersten Abschnitts (20) des zweiteiligen Befestigungssystems (22) an der Innenauskleidung (12) mit einem Klebstoff (24).

8. Das Verfahren nach Anspruch 7, ferner umfassend den Schritt des Anbringens des ersten Abschnitts (20) des zweiteiligen Befestigungssystems (22) an der Innenauskleidung (12) mit einem Silicon-Klebstoff (24).

9. Das Verfahren nach Anspruch 1, ferner umfassend den Schritt des Anbringens der elektronischen Vorrichtung (32) an dem zweiten Abschnitt (30) des zweiteiligen Befestigungssystems (22) mit einem Klebstoff (40).

10. Das Verfahren nach Anspruch 9, ferner umfassend den Schritt des Anbringens der elektronischen Vorrichtung (32) an dem zweiten Abschnitt (30) des zweiteiligen Befestigungssystems (22) mit einem auf Cyanoacrylat basierenden Klebstoff (40).

11. Das Verfahren nach Anspruch 1, ferner umfassend den Schritt des Bereitstellens eines zweiteiligen Befestigungssystems (22) mit ersten und zweiten Abschnitten (20, 30), die mit einander lösbar verbunden sind.

12. Das Verfahren nach Anspruch 1, wobei der Schritt (b) den Schritt des Verkapselns der elektronischen Vorrichtung (32) einschließt.

13. Ein Verfahren für die Anbringung einer elektronischen Vorrichtung an einem Reifen, das die folgenden Schritte einschließt:
(a) Bereitstellen eines vulkanisierten Reifens (10), wobei ein erster Abschnitt (20) eines zweiteiligen Befestigungssystems (22) an dem Reifen (10) angebracht ist;
(b) Bereitstellen eines zweiten Abschnitts (30) des zweiteiligen Befestigungssystems (22) getrennt von der elektronischen Vorrichtung (32); und
(c) Anbringen des zweiten Abschnitts (30) des zweiteiligen Befestigungssystems (22) an dem ersten Abschnitt (20) des zweiteiligen Befestigungssystems (22),
wobei das zweiteilige Befestigungssystem (22) eine Vielzahl von kleinen Verbindungsstücken an dem ersten Abschnitt (20) und dem zweiten Abschnitt (30) des zweiteiligen Befestigungssystems (22) zum Anbringen des zweiten Abschnitts (30) an dem ersten Abschnitt (20) des zweiteiligen Befestigungssystems (22) in Schritt (c) umfasst,
**dadurch gekennzeichnet, dass**
der zweite Abschnitt (30) des zweiteiligen Befestigungssystems (22) an dem ersten Abschnitt (20) des zweiteiligen Befestigungssystems (22) angebracht ist, wobei die an dem Reifen (10) zu befestigende elektronische Vorrichtung (32) zwischen den ersten und zweiten Abschnitten (20, 30) des zweiteiligen Befestigungssystems (22) eingelegt ist.

14. Ein Reifen, der folgendes einschließt:
einen ersten Abschnitt (20) eines zweiteiligen Befestigungssystems (22), der an dem Reifen (10) angebracht ist;
einen zweiten Abschnitt (30) des zweiteiligen Befestigungssystems (22), der an dem ersten Abschnitt (20) des zweiteiligen Befestigungssystems (22) angebracht ist; und
eine elektronische Vorrichtung (32), die an dem zweiten Abschnitt (30) des zweiteiligen Befestigungssystems (22) angebracht ist,
wobei das zweiteilige Befestigungssystem (22) eine Vielzahl von kleinen Verbindungsstücken an dem ersten Abschnitt (20) und dem zweiten Abschnitt (30) des zweiteiligen Befestigungssystems (22) zum Anbringen des zweiten Abschnitts (30) an dem ersten Abschnitt (20) des zweiteiligen Befestigungssystems (22) umfasst,
**dadurch gekennzeichnet, dass**
der zweite Abschnitt (30) des zweiteiligen Befestigungssystems (22) an dem ersten Abschnitt (20) des zweiteiligen Befestigungssystems (22) angebracht ist, wobei die an dem Reifen (10) zu befestigende elektronische Vorrichtung (32) zwischen den ersten und zweiten Abschnitten (20, 30) des zweiteiligen Befestigungssystems (22) eingelegt ist.

## Revendications

1. Procédé de fixation d'un dispositif électronique à un pneu, comprenant les étapes de :
(a) disposition d'un pneu vulcanisé (10) ayant une première partie (20) d'un système de fixation mécanique en deux pièces (22) fixé au pneu (10) ;
(b) fixation du dispositif électronique (32) à une seconde partie séparée (30) du système de fixation en deux pièces (22) ; et
(c) fixer la seconde partie (30) du système de fixation en deux pièces (22) à la première partie (20) du système de fixation e, deux pièces (22),
le système de fixation en deux pièces (22) comprenant une pluralité de petits connecteurs à la première partie (20) et à la seconde partie (30) du système de fixation en deux pièces (22) pour fixer la seconde partie (30) à la première partie (20) du système de fixation en deux pièces (22) dans l'étape (C),
**caractérisé par le fait que**
il comprend en outre l'étape de disposition d'un système de fixation à boucles et crochets pour le système de fixation mécanique en deux pièces (22).

2. Procédé selon la revendication 1, dans lequel l'étape (b) comprend l'étape de liaison d'une puce d'identification par radiofréquence (32) à la seconde partie (30) du système de fixation en deux pièces (22).

3. Procédé selon la revendication 1, dans lequel l'étape (b) comprend l'étape de liaison d'un capteur de pression à la seconde partie (30) du système de fixation en deux pièces (22).

4. Procédé selon la revendication 1, dans lequel l'étape (b) comprend l'étape de liaison d'un capteur de température à la seconde partie (30) du système de fixation en deux pièces (22).

5. Procédé selon la revendication 1, comprenant en outre l'étape de disposition, pour le système de fixation mécanique deux pièces (22), d'un système de fixation qui se resserre lorsqu'il est soumis à des vibrations.

6. Procédé selon la revendication 1, comprenant en outre l'étape de fixation de la première partie (20) du système de fixation en deux pièces (22) au revêtement intérieur (12) du pneu (10) avant qu'il ne soit vulcanisé.

7. Procédé selon la revendication 6, comprenant en outre l'étape de fixation de la première partie (20) du système de fixation en deux pièces (22) au revêtement intérieur (12) avec un adhésif (24).

8. Procédé selon la revendication 7, comprenant en outre l'étape de fixation de la première partie (20) du système de fixation en deux pièces (22) au revêtement intérieur (12) avec un adhésif silicone (24).

9. Procédé selon la revendication 1, comprenant en outre l'étape de fixation du dispositif électronique (32) à la seconde partie (30) du système de fixation en deux pièces (22) avec un adhésif (40).

10. Procédé selon la revendication 9, comprenant en outre l'étape de fixation du dispositif électronique (32) à la seconde partie (30) du système de fixation en deux pièces (22) avec un adhésif à base de cyanoacrylate (40).

11. Procédé selon la revendication 1, comprenant en outre l'étape de disposition d'un système de fixation en deux pièces (22) ayant des première et seconde parties (20, 30) qui sont reliées de manière amovible l'une à l'autre.

12. Procédé selon la revendication 1, dans lequel l'étape (b) comprend l'étape d'encapsulation du dispositif électronique (32).

13. Procédé de fixation d'un dispositif électronique à un pneu, comprenant les étapes de :
(a) disposition d'un pneu vulcanisé (10) ayant une première partie (20) d'un système de fixation en deux pièces (22) fixée au pneu (10) ;
(b) disposition d'une seconde partie (30) du système de fixation en deux pièces (22) de manière séparée du dispositif électronique (32) ; et
(c) fixer la seconde partie (30) du système de fixation en deux pièces (22) à la première partie (20) du système de fixation en deux pièces (22),
le système de fixation en deux pièces (22) comprenant une pluralité de petits connecteurs à la première partie (20) et à la seconde partie (30) du système de fixation en deux pièces (22) pour fixer la seconde partie (30) à la première partie (20) du système de fixation en deux pièces (22) dans l'étape (c),
**caractérisé par le fait que**
la seconde partie (30) du système de fixation en deux pièces (22) est fixée à la première partie (20) du système de fixation en deux pièces (22) avec le dispositif électronique (32) à fixer au pneu (10) pris en sandwich entre les première et seconde parties (20, 30) du système de fixation en deux pièces (22).

14. Pneu comprenant :
une première partie (20) d'un système de fixation en deux pièces (22) fixée au pneu (10) ;
une seconde partie (30) du système de fixation en deux pièces (22) fixée à la première partie (20) du système de fixation en deux pièces (22) ; et
un dispositif électronique (32) fixé à la seconde partie (30) du système de fixation en deux pièces (22),
le système de fixation en deux pièces (22) comprenant une pluralité de petits connecteurs à la première partie (20) et à la seconde partie (30) du système de fixation en deux pièces (22) pour fixer la seconde partie (30) à la première partie (20) du système de fixation en deux pièces (22),
**caractérisé par le fait que**
la seconde partie (30) du système de fixation en deux pièces (22) est fixée à la première partie (20) du système de fixation en deux pièces (22) avec le dispositif électronique (32) à fixer au pneu (10) pris en sandwich entre les première et seconde parties (20, 30) du système de fixation en deux pièces (22).
